# EUROPEAN PATENT APPLICATION

(11) **EP 3 567 884 A1**
(43) Date of publication of application: **13.11.2019**
(21) Application number: 17890485.0
(22) Date of filing: 29.11.2017
(51) Int. Cl.: H04W 4/20

(54) **INFORMATION TRANSMISSION AND RESOURCE CONFIGURATION METHOD AND DEVICE, CONTROL NODE, NETWORK ELEMENT, AND STORAGE MEDIUM**

(30) Priority: 06.01.2017 CN 201710011181
(71) Applicant: ZTE Corporation, Shenzhen, Guangdong 518057 (CN)
(72) Inventor: WANG, Xin, Shenzhen Guangdong 518057 (CN); HUANG, He, Shenzhen Guangdong 518057 (CN)
(74) Representative: Regimbeau
(86) International application number: PCT/CN2017/113668
(87) International publication number: WO 2018/126823

(57) **Abstract**

Provided are an information transmission method and apparatus, a resource configuration method and apparatus, a control node, a network element, and a storage medium. The information transmission method includes: receiving indication information for indicating that a first network element needs to obtain terminal capability information; determining, according to a radio access technology (RAT) type used by the first network element, terminal capability information needed by the first network element; and transmitting the determined terminal capability information to the first network element. Through the present invention, the problem, how a network element obtains terminal capability information in time, is solved, and thereby the efficiency of obtaining the terminal capability information is improved.

## Description

### CROSS-REFERENCES TO RELATED APPLICATIONS

This application is based on and claims priority to a Chinese patent application No. 201710011181.1 filed on January 6, 2017, invention of which is incorporated herein by reference in its entirety.

### TECHNICAL FIELD

The present invention relates to the field of communications and in particular, relates to an information transmission method and apparatus, a resource configuration method and apparatus, a control node, a network element and a storage medium.

### BACKGROUND

In a communication system, each user equipment (UE) has an inherent set of parameters that can be identified as whether a feature is supported, or as different values that can be configured optionally. These parameters are used to support or limit the behavior when the network side performs configuration and/or scheduling on the UE. Therefore, in the standard, the parameters are defined as UE capability information. The UE capability information is further divided into UE radio capability information and UE core network capability information according to different scopes of operation and corresponding to the network architecture. The present application is directed primarily to the former (UE radio capability information), which will not be described otherwise below.

Generally, a UE may support multiple radio access technologies (RAT), and each RAT has a corresponding set of radio capability information which is coded by abstract syntax notation one (ASN.1) employed in the respective RAT standard. The long term evolution (LTE) system is taken as an example. Since the LTE system supports interoperation with the GPRS EDGE radio access network (GERAN) system and the CDMA2000-1xRTT system, a UE of a LTE version typically supports inclusion of radio capability information of three RATs. Since the ASN.1 of each RAT is different, the radio capability information corresponding to each RAT is respectively included in a container, and is generally presented in the form of a container list (referred to as UE-Capability RAT-ContainerList in LTE). The evolved universal terrestrial radio access network (E-UTRAN) in the LTE system only interprets the UE-EUTRA-Capability container in the list and other RAT types supported by the UE, but not reads the radio capability information in the container corresponding to another RAT.

Since many parameters are included in the UE radio capability information, when the UE radio capability information is transmitted (for example, when the UE reports the radio capability information to the E-UTRAN) on the radio interface, the UE radio capability information is signaling with large size, that is, transmission of such information will take up a lot of radio resources. In order to avoid frequent transmission of UE radio capability information on the radio interface, by taking the LTE system as an example, when the UE is in an evolved packet system connection management (ECM) idle state, capability information of the UE is stored in a mobility management entity (MME) located in the core network (CN) (while the radio capability information is released in the E-UTRAN). Therefore, in some control plane procedures, such as an Initial Context Setup procedure, the MME may transmit the radio capability information of the UE to the E-UTRAN through an Initial Context Setup Request message of an S1 interface, thereby avoiding that the E-UTRAN requests the UE to report its radio capability information via a radio interface.

On one hand, the MME does not interpret the UE radio capability information reported by the E-UTRAN when the UE is in the ECM_Connected state, but only performs the operation of saving or updating. On the other hand, the UE radio capability information stored by the MME may be incomplete (e.g., missing radio capability information corresponding to a certain RAT). Then, when the E-UTRAN has a demand, for example, when the E-UTRAN decides to trigger a control procedure of an inter-RAT handover of the UE to the GERAN system while does not obtain the UE-GERAN-Capability from the MME, the E-UTRAN still needs to request the UE to report the radio capability information corresponding to the GERAN, so that the information may be forwarded to a GERAN target node via the MME, thereby avoiding possible interruption in the inter-RAT HO procedure.

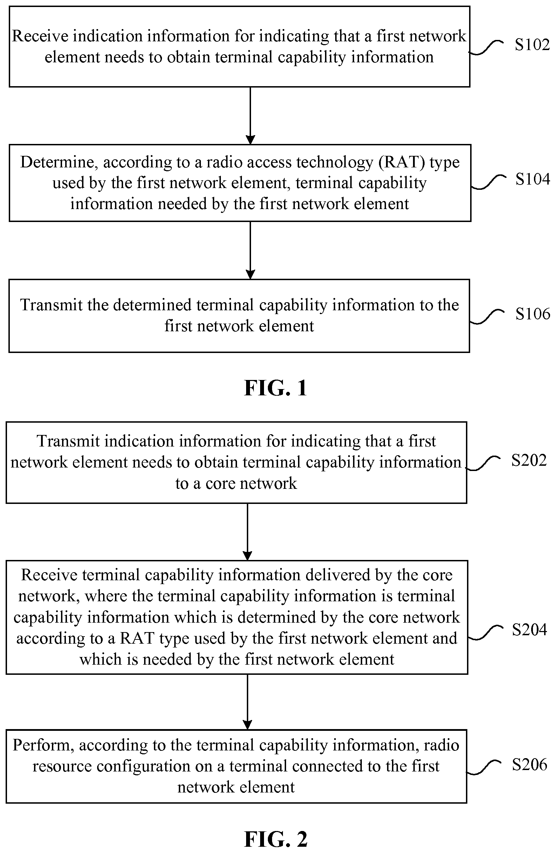

At present, the industry has begun research on the fifth generation (5G) communication system. In order to achieve a smooth transition from a widely deployed LTE system to a 5G system, in a network architecture supported by multiple communication operators and with reference to the schematic diagram of FIG. 1, the core network is an upgraded CN (referred to as a 5G CN) capable of supporting various functions of 5G, and the 5G radio access network (RAN) simultaneously supports two RATs, i.e., the LTE access and the 5G new radio (NR) carrier access, on the radio interface. That is, the 5G UE may select an appropriate RAT cell for access according to the residence condition. That is, it is embodied that the 5G technology is supported in the 5G CN by a UE, while one of the two RATs may be used in the 5G RAN; and the ASN.1 forms of the two RATs are also different. Therefore, when the UE accesses the network through the two RATs, the radio capability information that the serving base station in the 5G RAN needs to obtain is different.

After the RAT (E-UTRAN or NR) node accepts the access of the UE, in addition to the demand of the inter-RAT HO procedure described above, another demand exists that the serving base station may need to add another RAT (NR or E-UTRAN) to provide, in a tightly coupled manner, the UE with additional radio resources for communication. That is, in this case, the serving base station must obtain the radio capability information corresponding to the two RATs for simultaneous use.

It can be seen that in the complex 5G network architecture, how to enable the serving base station in the 5G RAN to obtain correct and sufficient UE radio capability information in time is a problem to be solved.

In view of the above technical problem in the related art, no effective solution has yet been proposed.

### SUMMARY

Embodiments of the present invention provide an information transmission method and apparatus, a resource configuration method and apparatus, a control node, a network element and a storage medium, to at least solve the problem, in the related art, of how a network element obtains terminal capability information in time.

An embodiment of the present invention provides an information transmission method. The method includes: receiving indication information for indicating that a first network element needs to obtain terminal capability information; determining, according to a RAT type used by the first network element, the terminal capability information needed by the first network element; and transmitting the determined terminal capability information to the first network element.

An embodiment of the present invention provides a resource configuration method. The method includes: transmitting to a core network indication information for indicating that a first network element needs to obtain terminal capability information; receiving terminal capability information delivered by the core network, where the terminal capability information is terminal capability information which is needed by the first network element and is determined by the core network according to a RAT type used by the first network element; and performing, according to the terminal capability information, radio resource configuration on a terminal connected to the first network element.

An embodiment of the present invention provides an information transmission apparatus. The apparatus includes: a reception module, which is configured to receive indication information for indicating that a first network element needs to obtain terminal capability information; a determination module, which is configured to determine, according to a RAT type used by the first network element, the terminal capability information needed by the first network element; and a transmission module, which is configured to transmit the determined terminal capability information to the first network element.

An embodiment of the present invention provides a resource configuration apparatus. The apparatus includes: a transmission module, which is configured to transmit to a core network indication information for indicating that a first network element needs to obtain terminal capability information; a reception module, which is configured to receive terminal capability information delivered by the core network, where the terminal capability information is terminal capability information which is needed by the first network element and is determined by the core network according to a RAT type used by the first network element; and a processing module, which is configured to perform, according to the terminal capability information, radio resource configuration on a terminal connected to the first network element.

An embodiment of the present invention provides a control node. The control node is located in a core network and includes: a processor, which is configured to receive indication information for indicating that a first network element needs to obtain terminal capability information, and determine, according to a RAT type used by the first network element, the terminal capability information needed by the first network element; and a radio frequency module, which is configured to transmit the determined terminal capability information to the first network element.

An embodiment of the present invention provides a network element. The network element includes: a radio frequency module, which is configured to transmit to a core network indication information for indicating that a first network element needs to obtain terminal capability information, and receive terminal capability information delivered by the core network, where the terminal capability information is terminal capability information which is needed by the first network element and is determined by the core network according to a RAT type used by the first network element ; and a processor, which is configured to perform, according to the terminal capability information, radio resource configuration on a terminal connected to the first network element.

Another embodiment of the present invention further provides a storage medium. The storage medium is configured to store program codes for executing the following steps: receiving indication information for indicating that a first network element needs to obtain terminal capability information; determining, according to a RAT type used by the first network element, the terminal capability information needed by the first network element; and transmitting the determined terminal capability information to the first network element.

Another embodiment of the present invention further provides a storage medium. The storage medium is configured to store program codes for executing the following steps: transmitting to a core network indication information for indicating that a first network element needs to obtain terminal capability information; receiving terminal capability information delivered by the core network, where the terminal capability information is terminal capability information which is needed by the first network element and is determined by the core network according to a RAT type used by the first network element; and performing, according to the terminal capability information, radio resource configuration on a terminal connected to the first network element.

Through the technical solutions of the present invention, in response to determining that the indication information for indicating that a first network element needs to obtain terminal capability information is received, the terminal capability information needed by the first network element may be determined according to a RAT type used by the first network element, and the determined terminal capability information is transmitted to the first network element. That is, the terminal capability information needed by the first network element may be determined according to the RAT type used by the first network element, and the determined terminal capability information is then transmitted to the first network element, so that the first network element can obtain the terminal capability information in time when the terminal capability information is needed. Therefore, the problem, how the network element obtains terminal capability information in time, can be solved, and the efficiency of obtaining terminal capability information is improved.

### BRIEF DESCRIPTION OF DRAWINGS

The drawings described herein are used to provide a further understanding of the present invention and form a part of the present application. The exemplary embodiments and descriptions thereof in the present invention are used to explain the present invention and not to limit the present invention in any improper way. In the drawings:
FIG. 1 is a flowchart of an information transmission method according to an embodiment of the present invention;
FIG. 2 is a flowchart of a resource configuration method according to an embodiment of the present invention;
FIG. 3 is a structural block diagram of an information transmission apparatus according to an embodiment of the present invention;
FIG. 4 is a structural block diagram of a resource configuration apparatus according to an embodiment of the present invention;
FIG. 5 is a structural block diagram of a control node according to an embodiment of the present invention;
FIG. 6 is a structural block diagram of a network element according to an embodiment of the present invention;
FIG. 7 is a schematic diagram of an architecture of a communication system according to an embodiment of the present invention;
FIG. 8 is a schematic diagram of a scenario according to an embodiment 1 of the present invention;
FIG. 9 is a flowchart of a method according to the embodiment 1 of the present invention;
FIG. 10 is a flowchart of a method according to an embodiment 2 of the present invention;
FIG. 11 is a flowchart of a method according to an embodiment 3 of the present invention;
FIG. 12 is a schematic diagram of a scenario according to an embodiment 4 of the present invention; and
FIG. 13 is a flowchart of a method according to the embodiment 4 of the present invention.

### DETAILED DESCRIPTION

The present invention will be described hereinafter in detail with reference to the drawings in conjunction with the embodiments. It is to be noted that if not in collision, the embodiments and features therein in the present application may be combined with each other.

It is to be noted that the terms "first", "second" and the like in the description, claims and drawings of the present invention are used to distinguish between similar objects and are not necessarily used to describe a particular order or sequence.

### Embodiment 1

The embodiment of the present invention provides an information transmission method. FIG. 1 is a flowchart of the information transmission method according to the embodiment of the present invention. As shown in FIG. 1, the method includes the steps described below.

In S102, indication information for indicating that a first network element needs to obtain terminal capability information is received.

In S104, the terminal capability information needed by the first network element is determined according to a RAT type used by the first network element.

In S106, the determined terminal capability information is transmitted to the first network element.

Through the above steps, in response to determining that the indication information for indicating that a first network element needs to obtain terminal capability information is received, the terminal capability information needed by the first network element may be determined according to the RAT type used by the first network element, and the determined terminal capability information is then transmitted to the first network element, so that the first network element can obtain the terminal capability information in time when the terminal capability information is need. Therefore, the problem, how the network element obtains terminal capability information in time, can be solved, and the efficiency of obtaining terminal capability information is improved.

It is to be noted that the above indication information may be request information, and may be an Initial Context Setup procedure, but is not limited thereto.

In an embodiment of the present invention, before the step S102, the above method may further include: obtaining terminal capability information corresponding to a RAT type supported by a terminal; and storing the obtained terminal capability information.

It is to be noted that the terminal capability information corresponding to the RAT type supported by the terminal may be obtained in at least one of the following manners. Manner 1: In an initial access process of the terminal, specified terminal capability information reported by a second network element is received. The specified terminal capability information includes: terminal capability information corresponding to a RAT type used by the second network element and terminal capability information corresponding to a RAT type interoperable with the RAT type used by the second network element; and the terminal capability information needed by the first network element is contained in the specified terminal capability information. Manner 2: Terminal capability information applicable to all RAT types is received.

It is to be noted that the first network element and the second network element described above may be the same network element, and may also be different network elements. In the case of the first network element and the second network element being the same network element, in the above manner 1, actually in the initial access process of the terminal, terminal capability information, corresponding to a RAT type used by the first network element and reported by the first network element, and terminal capability information, corresponding to a RAT type interoperable with the RAT type used by the first network element, are received, which is actually the operation performed in the first initial access of the first network element. While in the case of the first network element and the second network element being different network elements, the manner 1 is characterized in that the terminal capability information reported by the second network element includes the terminal capability information needed by the first network element.

It is to be noted that the above initial access process may be an attach process in the existing art.

It is to be noted that the manner 1 may include at least one of the following modes. Mode a: A container list transmitted by the second network element is received, where the container list includes: a first container that includes the terminal capability information corresponding to the RAT type used by the second network element, and a second container that includes the terminal capability information corresponding to the RAT type interoperable with the RAT type used by the second network element. Mode b: a plurality of containers transmitted by the second network element is received, where the plurality of the containers is obtained after the second network element extracts containers from the container list, and each of the containers includes one piece of terminal capability information corresponding to one RAT type. Mode c: A plurality of groups of containers transmitted by the second network element are received, where each of the plurality of groups of containers includes: terminal capability information corresponding to a specified RAT type and terminal capability information corresponding to a RAT type interoperable with the specified RAT type; and the plurality of groups of containers are obtained by the second network element dividing the container list according to RAT types and RAT types interoperable with the RAT types.

It is to be noted that in a case where a plurality of RAT types interoperable with the RAT type used by the second network element exist, a plurality of second containers are contained in the container list. Each of the plurality of second containers includes terminal capability information corresponding to one RAT type interoperable with the RAT type used by the second network element.

It is to be noted that in a case where the mode a is used, the container list corresponds to the RAT type used by the first network element. Therefore, in an embodiment of the present invention, the above step S104 may be expressed as: determining, according to the RAT type used by the first network element, a container list corresponding to the RAT type used by the first network element; and the above step S106 may be expressed as: transmitting the determined container list to the first network element.

It is to be noted that in a case where the mode b is used, after the plurality of the containers transmitted by the second network element is received, the method may further include: dividing all of the containers according to RAT types and RAT types interoperable with the RAT types to obtain a plurality of groups of containers. Each of the plurality of groups of containers includes the terminal capability information corresponding to the specified RAT type and the terminal capability information corresponding to the RAT type interoperable with the specified RAT type.

That is, the division of the all containers according to the RAT type and a RAT type interoperable with the RAT type may be performed by the second network element, or may be performed by the core network. In the above mode c, the division is performed by the second network element. In the above mode b, the division is performed by the core network.

It is to be noted that in the case where the mode b is used, an identifier of the each of the containers is coded in application layer protocol ASN.1 form of an interface between the second network element and a core network.

It is to be noted that in a case where the mode b or mode c is used, the plurality of groups of containers respectively correspond to RAT types used by a plurality of network elements. Therefore, in an embodiment of the present invention, the above step S104 may be expressed as: determining, according to the RAT type used by the first network element and from the plurality of groups of containers, a group of containers corresponding to the RAT type used by the first network element; and the above step S106 may be expressed as: transmitting the determined group of containers to the first network element.

It is to be noted that the plurality of groups of containers corresponding to RAT types used by a plurality of network elements may be expressed as a group of containers corresponding to a RAT type used by a network element, or may be expressed as a group of containers corresponding to RAT types used by a plurality of network elements, for example, in the case where the RAT types used by the plurality of network elements are the same, and actually the RAT types used by the plurality of network elements correspond to the same group of containers, but is not limited thereto. In a case where the RAT types used by the plurality of network elements are different, the RAT types used by the plurality of network elements correspond to different groups of containers, but are not limited thereto.

It is to be noted that in a case where the manner 2 is used, the terminal capability information corresponding to the all RAT types is contained in a container list, and the step of transmitting the determined terminal capability information to the first network element includes: transmitting the container list to the first network element.

After the terminal capability information is obtained in the various manners described above, the obtained terminal capability information is stored, so that the network element can quickly obtain the needed terminal capability information when the terminal capability information is needed again.

It is to be noted that the above terminal capability information may include at least one of: terminal radio capability information and terminal core network capability information, but is not limited thereto.

It is to be noted that the above steps may, but may not necessarily, be performed by a core network device.

As describe below, the mode c is taken as an example. Terminal capability information obtained by the second network element includes: terminal capability information corresponding to four RAT types: RAT1, RAT2, RAT3 and RAT4. RAT1 is interoperable with RAT2, RAT3 and RAT4. RAT2 is interoperable with RAT3 and RAT4. RAT3 is interoperable with RAT4. Then, the container list may be divided into four groups of containers. One group of containers includes: terminal capability information corresponding to RAT1, RAT2, RAT3 and RAT4, and the specified RAT type in the group of containers is RAT1. One group of containers includes: terminal capability information corresponding to RAT2, RAT3 and RAT4, and the specified RAT type in the group of containers is RAT2. One group of containers includes: terminal capability information corresponding to RAT3 and RAT4, and the specified RAT type in the group of containers is RAT3. One group of containers includes: terminal capability information corresponding to RAT4, and the specified RAT type in the group of containers is RAT4. It is assumed that terminal capability information needed by the first network element is terminal capability information corresponding to RAT2, the group of containers including terminal capability information corresponding to RAT2, RAT3 and RAT4 is transmitted to the first network element.

From the description of the embodiment described above, it will be apparent to those skilled in the art that the method in the embodiment described above may be implemented by software plus a necessary general-purpose hardware platform, or may of course be implemented by hardware. However, in many cases, the former is a preferred implementation mode. Based on this understanding, the solutions provided by the present invention substantially, or the part contributing to the related art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device or the like) to execute the method according to each embodiment of the present invention.

### Embodiment 2

The embodiment of the present application further provides a resource configuration method. FIG. 2 is a flowchart of the resource configuration method according to the embodiment of the present invention. As shown in FIG. 2, the method includes the steps described below.

In S202, indication information is transmitted to a core network. The indication information is used for indicating that a first network element needs to obtain terminal capability information.

In S204, terminal capability information delivered by the core network is received. The terminal capability information is terminal capability information which is needed by the first network element and is determined by the core network according to a RAT type used by the first network element.

In S206, radio resource configuration is performed, according to the terminal capability information, on a terminal connected to the first network element.

Through the above steps, after the indication information for indicating that a first network element needs to obtain terminal capability information is transmitted to the core network, the terminal capability information delivered by the core network may be received, where the terminal capability information is terminal capability information which is determined by the core network according to the RAT type used by the first network element and which is needed by the first network element. Thus, the first network element can obtain the terminal capability information in time when the terminal capability information is need. Therefore, the problem, how the network element obtains terminal capability information in time, can be solved, and the efficiency of obtaining terminal capability information is improved.

It is to be noted that the above indication information may be request information, and may be an Initial Context Setup procedure, but is not limited thereto.

In an embodiment of the present invention, before the step S202, the above method may further include that: in an initial access process of the terminal, a second network element reports terminal capability information corresponding to a supported RAT type to the core network.

It is to be noted that the second network element may report the terminal capability information corresponding to the supported RAT type to the core network in at least one of the following manners. Manner 1: In the initial access process of the terminal, the second network element reports specified terminal capability information to the core network, where the specified terminal capability information includes: terminal capability information corresponding to a RAT type used by the second network element and terminal capability information corresponding to a RAT type interoperable with the RAT type used by the second network element, which are reported to the core network; and the terminal capability information needed by the first network element is contained in the specified terminal capability information. Manner 2: The second network element reports terminal capability information applicable to all RAT types to the core network.

It is to be noted that the first network element and the second network element may be the same network element, or may be different network elements, but are not limited thereto.

It is to be noted that the manner 1 may include at least one of the following modes. Mode a: The second network element receives a container list reported by the terminal, and reports the container list to the core network. The container list includes: a first container that includes the terminal capability information corresponding to the RAT type used by the second network element, and a second container that includes the terminal capability information corresponding to the RAT type interoperable with the RAT type used by the second network element. Mode b: The second network element receives the container list reported by the terminal, extracts and obtains a plurality of containers in the container list, and reports the obtained plurlity of the containers to the core network. Mode c: The second network element receives the container list reported by the terminal, divides the container list according to RAT type and RAT type interoperable with the RAT types to obtain a plurality of groups of containers, and reports the plurality of groups of containers to the core network. Each of the plurality of groups of containers includes: terminal capability information corresponding to a specified RAT type and terminal capability information corresponding to a RAT type interoperable with the specified RAT type.

It is to be noted that in a case where a plurality of RAT types interoperable with the RAT type used by the second network element exist, a plurality of second containers are contained in the container list. Each of the plurality of second containers includes terminal capability information corresponding to one RAT type interoperable with the RAT type used by the second network element.

It is to be noted that in a case where the mode a is used, the container list corresponds to the RAT type used by the first network element.

It is to be noted that in a case where the mode b is used, the step of reporting the obtained plurality of the containers to the core network may be expressed as: the second network element performs coding on an identifier of the each of the containers in application layer protocol ASN.1 form of an interface between the second network element and a core network, and reports the each of the containers after coding to the core network.

It is to be noted that in a case where the mode b or mode c is used, the plurality of groups of containers respectively correspond to RAT types used by a plurality of network elements. In the case where the mode b is used, the plurality of groups of containers are obtained by the core network dividing all of the containers according to RAT types and RAT types interoperable with the RAT types, and each of the plurality of groups of containers includes: the terminal capability information corresponding to the specified RAT type and the terminal capability information corresponding to the RAT type interoperable with the specified RAT type.

It is to be noted that the plurality of groups of containers corresponding to RAT types used by a plurality of network elements may be expressed as a group of containers corresponding to a RAT type used by a network element, or may be expressed as a group of containers corresponding to RAT types used by a plurality of network elements, for example, in the case where the RAT types used by the plurality of network elements are the same, and actually the RAT types used by the plurality of network elements correspond to the same group of containers, but is not limited thereto. In a case where the RAT types used by the plurality of network elements are different, the RAT types used by the plurality of network elements correspond to different groups of containers, but are not limited thereto.

In an implementation mode, the above steps may, but may not necessarily, be performed by a first network element.

It is to be noted that the first network element, the second network element, and the network element appearing in the present application may be a serving network element, such as a base station, but are not limited thereto.

From the description of the embodiment described above, it will be apparent to those skilled in the art that the method in the embodiment described above may be implemented by software plus a necessary general-purpose hardware platform, or may of course be implemented by hardware. However, in many cases, the former is a preferred implementation mode. Based on this understanding, the solutions provided by the present invention substantially, or the part contributing to the related art, may be embodied in the form of a software product. The computer software product is stored in a storage medium (such as a ROM/RAM, a magnetic disk or an optical disk) and includes several instructions for enabling a terminal device (which may be a mobile phone, a computer, a server, a network device or the like) to execute the method according to each embodiment of the present invention.

### Embodiment 3

The present embodiment further provides an information transmission apparatus. The apparatus is configured to implement the above-mentioned embodiments and preferred implementation modes. What has been described will not be repeated. As used below, a term "module" may be software, hardware or a combination thereof capable of implementing predetermined functions. The apparatus in the embodiment described below is preferably implemented by software, but implementation by hardware or by a combination of software and hardware is also possible and conceived.

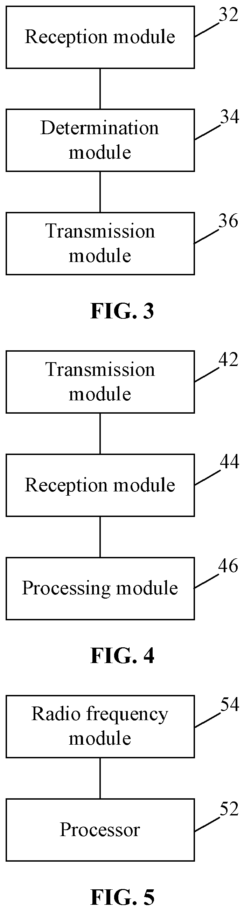

FIG. 3 is a structural block diagram of the information transmission apparatus according to the embodiment of the present invention. As shown in FIG. 3, the apparatus includes: a reception module 32, a determination module 34 and a transmission module 36.

The reception module 32 is configured to receive indication information for indicating that a first network element needs to obtain terminal capability information.

The determination module 34 is connected to the reception module 32, and is configured to determine, according to a RAT type used by the first network element, the terminal capability information needed by the first network element.

The transmission module 36 is connected to the determination module 34, and is configured to transmit the determined terminal capability information to the first network element.

Through the above apparatus, in the case where the reception module 32 receives the indication information for indicating that a first network element needs to obtain terminal capability information, the determination module 34 may determine the terminal capability information needed by the first network element according to the RAT type used by the first network element, and the transmission module 36 transmits the determined terminal capability information to the first network element, so that the first network element can obtain the terminal capability information in time when the terminal capability information is need. Therefore, the problem, how the network element obtains terminal capability information in time, can be solved, and the efficiency of obtaining terminal capability information is improved.

It is to be noted that the above indication information may be request information, and may be an Initial Context Setup procedure, but is not limited thereto.

In an embodiment of the present invention, the apparatus may further include: an obtaining module, which is configured to obtain terminal capability information corresponding to the RAT type supported by a terminal; and a storage module, which is configured to store the obtained terminal capability information.

It is to be noted that the obtaining module may further be connected to the determination module 34, but is not limited thereto.

In an embodiment of the present invention, the obtaining module may further be configured to obtain the terminal capability information corresponding to the RAT type supported by the terminal in at least one of the following manners. Manner 1: In an initial access process of the terminal, specified terminal capability information reported by a second network element is received. The specified terminal capability information includes: terminal capability information corresponding to a RAT type used by the second network element and terminal capability information corresponding to a RAT type interoperable with the RAT type used by the second network element; and the terminal capability information needed by the first network element is contained in the specified terminal capability information. Manner 2: Terminal capability information applicable to all RAT types is received.

It is to be noted that the obtaining module may further be configured to obtain the terminal capability information corresponding to the RAT type supported by the terminal in at least one of the following manners. Mode a: A container list transmitted by the second network element is received, where the container list includes: a first container that includes the terminal capability information corresponding to the RAT type used by the second network element, and a second container that includes the terminal capability information corresponding to the RAT type interoperable with the RAT type used by the second network element. Mode b: a plurality of containers transmitted by the second network element is received, where the plurality of the containers is obtained after the second network element extracts the containers in the container list, and each of the containers includes one of piece of terminal capability information corresponding to one RAT type. Mode c: A plurality of groups of containers transmitted by the second network element are received, where each of the plurality of groups of containers includes: terminal capability information corresponding to a specified RAT type and terminal capability information corresponding to a RAT type interoperable with the specified RAT type; and the plurality of groups of containers are obtained by the second network element dividing the container list according to RAT types and RAT types interoperable with the RAT types.

It is to be noted that the first network element and the second network element may be the same network element, or may be different network elements, but are not limited thereto.

It is to be noted that the above initial access process may be an attach process in the existing art.

It is to be noted that in a case where a plurality of RAT types interoperable with the RAT type used by the second network element exist, a plurality of second containers are included in the container list. Each of the plurality of second containers includes terminal capability information corresponding to a RAT type interoperable with the RAT type used by the second network element.

It is to be noted that in a case where the mode a is used, the container list corresponds to the RAT type used by the first network element. Therefore, in an embodiment of the present invention, the determination module 34 may further be configured to determine, according to the RAT type used by the first network element, a container list corresponding to the RAT type used by the first network element; and the transmission module 36 may further be configured to transmit the determined container list to the first network element.

In an embodiment of the present invention, the apparatus may further include: a division module, which is connected to the obtaining module and is configured to: in the case where the mode b is used, obtain the plurality of groups of containers by dividing all of the containers according to RAT types and RAT types interoperable with the RAT types. Each of the plurality of groups of containers includes: the terminal capability information corresponding to the specified RAT type and the terminal capability information corresponding to the RAT type interoperable with the specified RAT type.

It is to be noted that in the case where the mode b is used, identifiers of the plurality of groups of containers are coded in application layer protocol ASN.1 form of an interface between the second network element and a core network.

It is to be noted that in a case where the mode b or mode c is used, the plurality of groups of containers respectively correspond to RAT types used by a plurality of network elements. Therefore, in an embodiment of the present invention, the determination module 34 may further be configured to determine, according to the RAT type used by the first network element and from the plurality of groups of containers, a group of containers corresponding to the RAT type used by the first network element; and the transmission module 36 may further be configured to transmit the determined group of containers to the first network element.

It is to be noted that the plurality of groups of containers corresponding to RAT types used by a plurality of network elements may be expressed as a group of containers corresponding to a RAT type used by a network element, or may be expressed as a group of containers corresponding to RAT types used by a plurality of network elements, for example, in the case where the RAT types used by the plurality of network elements are the same, and actually the RAT types used by the plurality of network elements correspond to the same group of containers, but is not limited thereto. In a case where the RAT types used by the plurality of network elements are different, the RAT types used by the plurality of network elements correspond to different groups of containers, but are not limited thereto.

In an embodiment of the present invention, in a case where the manner 2 is used, the terminal capability information corresponding to the all RAT types is contained in a container list, and the transmission module 36 may further be configured to transmit the container list to the first network element.

It is to be noted that the above apparatus may, but may not necessarily, be located in a core network device.

It is to be noted that the various modules described above may be implemented by software or hardware. Implementation by hardware may, but may not necessarily, be performed in the following manners: the various modules described above are located in a same processor, or the various modules described above are located in their respective processors in any combination form.

### Embodiment 4

The embodiment of the present application further provides a resource configuration apparatus. FIG. 4 is a structural block diagram of the resource configuration apparatus according to the embodiment of the present invention. As shown in FIG. 4, the apparatus includes a transmission module 42, a reception module 44 and a processing module 46.

The transmission module 42 is configured to transmit indication information for indicating that a first network element needs to obtain terminal capability information to a core network.

The reception module 44 is connected to the transmission module 42 and is configured to receive terminal capability information delivered by the core network. The terminal capability information is terminal capability information which is needed by the first network element and which is determined by the core network according to a RAT type used by the first network element.

The processing module 46 is connected to the reception module 44 and is configured to perform, according to the terminal capability information, radio resource configuration on a terminal connected to the first network element.

Through the above apparatus, after the indication information for indicating that a first network element needs to obtain terminal capability information is transmitted to the core network, the terminal capability information delivered by the core network may be received, where the terminal capability information is terminal capability information which is determined by the core network according to the RAT type used by the first network element and which is needed by the first network element. Thus, the first network element can obtain the terminal capability information in time when the terminal capability information is need. Therefore, the problem, how the network element obtains terminal capability information in time, can be solved, and the efficiency of obtaining terminal capability information is improved.

It is to be noted that the above indication information may be request information, and may be an Initial Context Setup procedure, but is not limited thereto.

It is to be noted that the above apparatus may further include: a reporting module, which is configured to report terminal capability information corresponding to a supported RAT type to the core network.

In an embodiment of the present invention, the reporting module may further be configured to report the terminal capability information corresponding to the supported RAT type to the core network in at least one of the following manners. Manner 1: In the initial access process of the terminal, specified terminal capability information is transmitted to the core network, where the specified terminal capability information includes: terminal capability information corresponding to a RAT type used by the second network element and terminal capability information corresponding to a RAT type interoperable with the RAT type used by the second network element, which are reported to the core network; and the terminal capability information needed by the first network element is included in the specified terminal capability information. Manner 2: Terminal capability information applicable to all RAT types is reported to the core network.

It is to be noted that the first network element and the second network element may be the same network element, or may be different network elements, but are not limited thereto.

It is to be noted that the above reporting module may further be configured to report terminal capability information corresponding to a supported RAT type to the core network. Mode a: A container list reported by the terminal is received and is reported to the core network. The container list includes: a first container that includes the terminal capability information corresponding to the RAT type used by the second network element, and a second container that includes the terminal capability information corresponding to the RAT type interoperable with the RAT type used by the second network element. Mode b: The container list reported by the terminal is received, a plurality of containers in the container list is extracted and obtained, and the obtained plurality of the containers are reported to the core network. Mode c: The container list reported by the terminal is received, the container list is divided according to RAT types and RAT types interoperable with the RAT types to obtain a plurality of groups of containers, and the plurality of groups of containers are reported to the core network. Each of the plurality of groups of containers includes: terminal capability information corresponding to a specified RAT type and terminal capability information corresponding to a RAT type interoperable with the specified RAT type.

It is to be noted that in a case where a plurality of RAT types interoperable with the RAT type used by the second network element exist, a plurality of second containers are included in the container list. Each of the plurality of second containers includes terminal capability information corresponding to a RAT type interoperable with the RAT type used by the second network element.

It is to be noted that in a case where the mode a is used, the container list corresponds to the RAT type used by the first network element.

It is to be noted that in the case where the mode b is used, the reporting module may further be configured to perform coding on an identifier of the each of the containers in application layer protocol ASN.1 form of an interface between the second network element and a core network.

It is to be noted that in a case where the mode b or mode c is used, the plurality of groups of containers respectively correspond to RAT types used by a plurality of network elements. In the case where the mode b is used, the plurality of groups of containers are obtained by the core network dividing all of the containers according to RAT types and RAT types interoperable with the RAT types, and each of the plurality of groups of containers includes: the terminal capability information corresponding to the specified RAT type and the terminal capability information corresponding to the RAT type interoperable with the specified RAT type.

It is to be noted that the plurality of groups of containers corresponding to RAT types used by a plurality of network elements may be expressed as a group of containers corresponding to a RAT type used by a network element, or may be expressed as a group of containers corresponding to RAT types used by a plurality of network elements, for example, in the case where the RAT types used by the plurality of network elements are the same, and actually the RAT types used by the plurality of network elements correspond to the same group of containers, but is not limited thereto. In a case where the RAT types used by the plurality of network elements are different, the RAT types used by the plurality of network elements correspond to different groups of containers, but are not limited thereto.

In an implementation mode, the above apparatus may, but may not necessarily, be located in the first network element.

It is to be noted that the first network element, the second network element, and the network element appearing in the present application may be a serving network element, such as a base station, but are not limited thereto.

It is to be noted that the various modules described above may be implemented by software or hardware. Implementation by hardware may, but may not necessarily, be performed in the following manners: the various modules described above are located in a same processor, or the various modules described above are located in their respective processors in any combination form.

### Embodiment 5

The embodiment of the present application further provides a control node located in a core network. FIG. 5 is a structural block diagram of a control node according to the embodiment of the present invention. As shown in FIG. 5, the control node includes a processor 52 and a radio frequency module 54.

The processor 52 is configured to receive indication information for indicating that a first network element needs to obtain terminal capability information; and determine, according to a RAT type used by the first network element, the terminal capability information needed by the first network element.

The radio frequency module 54 is connected to the processor 52, and is configured to transmit the determined terminal capability information to the first network element.

Through the above control node, in the case where the processor 52 receives indication information for indicating that a first network element needs to obtain terminal capability information, the terminal capability information needed by the first network element may be determined according to the RAT type used by the first network element, and the radio frequency module 54 transmits the determined terminal capability information to the first network element, so that the first network element can obtain the terminal capability information in time when the terminal capability information is need. Therefore, the problem that how the network element obtains terminal capability information in time can be solved, and the efficiency of obtaining terminal capability information is improved.

It is to be noted that the above indication information may be request information, and may be an Initial Context Setup procedure, but is not limited thereto.

In an embodiment of the present invention, the processor 52 may further be configured to obtain terminal capability information corresponding to the RAT type supported by a terminal. It is to be noted that the control node may further include: a memory, which is connected to the processor 52 and is configured to store the obtained terminal capability information.

It is to be noted that the above processor may further be configured to obtain the terminal capability information corresponding to the RAT type supported by the terminal in at least one of the following manners. Manner 1: In an initial access process of the terminal, specified terminal capability information reported by a second network element is received. The specified terminal capability information includes: terminal capability information corresponding to a RAT type used by the second network element and terminal capability information corresponding to a RAT type interoperable with the RAT type used by the second network element; and the terminal capability information needed by the first network element is comprised in the specified terminal capability information. Manner 2: Terminal capability information applicable to all RAT types is received.

It is to be noted that the first network element and the second network element may be the same network element, or may be different network elements, but are not limited thereto.

It is to be noted that the processor 52 may further be configured to obtain the terminal capability information corresponding to the RAT type supported by the terminal in at least one of the following manners. Mode a: A container list transmitted by the second network element is received, where the container list includes: a first container that includes the terminal capability information corresponding to the RAT type used by the second network element, and a second container that includes the terminal capability information corresponding to the RAT type interoperable with the RAT type used by the second network element. Mode b: Each of containers transmitted by the second network element is received, where the plurality of the containers is obtained after the second network element extracts the containers in the container list, and the plurality of the containers includes terminal capability information corresponding to a RAT type. Mode c: A plurality of groups of containers transmitted by the second network element are received, where each of the plurality of groups of containers includes: terminal capability information corresponding to a specified RAT type and terminal capability information corresponding to a RAT type interoperable with the specified RAT type; and the plurality of groups of containers are obtained by the second network element dividing the container list according to a RAT type and a RAT type interoperable with the RAT type.

It is to be noted that in a case where a plurality of RAT types interoperable with the RAT type used by the second network element exist, a plurality of second containers are included in the container list. Each of the plurality of second containers includes terminal capability information corresponding to one RAT type interoperable with the RAT type used by the second network element.

It is to be noted that in a case where the mode a is used, the container list corresponds to the RAT type used by the first network element. Therefore, the processor 52 may further be configured to determine, according to the RAT type used by the first network element, a container list corresponding to the RAT type used by the first network element; and the radio frequency module is further configured to transmit the determined container list to the first network element.

It is to be noted that the processor 52 may further be configured to: in the case where the mode b is used, divide all of the containers according to the RAT type and a RAT type interoperable with the RAT type to obtain a plurality of groups of containers. Each of the plurality of groups of containers includes the terminal capability information corresponding to the specified RAT type and the terminal capability information corresponding to the RAT type interoperable with the specified RAT type.

It is to be noted that in the case where the mode b is used, identifiers of the plurality of groups of containers are coded in application layer protocol ASN.1 form of an interface between the second network element and a core network.

It is to be noted that in a case where the mode b or mode c is used, the plurality of groups of containers correspond to RAT types used by a plurality of network elements. Therefore, the processor 52 may further be configured to determine, according to the RAT type used by the first network element, a group of containers corresponding to the RAT type used by the first network element; and the radio frequency module is further configured to transmit the determined group of containers to the first network element.

It is to be noted that the plurality of groups of containers corresponding to RAT types used by a plurality of network elements may be expressed as a group of containers corresponding to a RAT type used by a network element, or may be expressed as a group of containers corresponding to RAT types used by a plurality of network elements, for example, in the case where the RAT types used by the plurality of network elements are the same, and actually the RAT types used by the plurality of network elements correspond to the same group of containers, but is not limited thereto. In a case where the RAT types used by the plurality of network elements are different, the RAT types used by the plurality of network elements correspond to different groups of containers, but are not limited thereto.

It is to be noted that in a case where the manner 2 is used, the terminal capability information corresponding to the all RAT types is included in a container list, and the radio frequency module is further configured to transmit the container list to the first network element.

It is to be noted that the first network element, the second network element, or the network element appearing in the embodiment of the present application may be a serving network element, such as a base station, but is not limited thereto.

### Embodiment 6

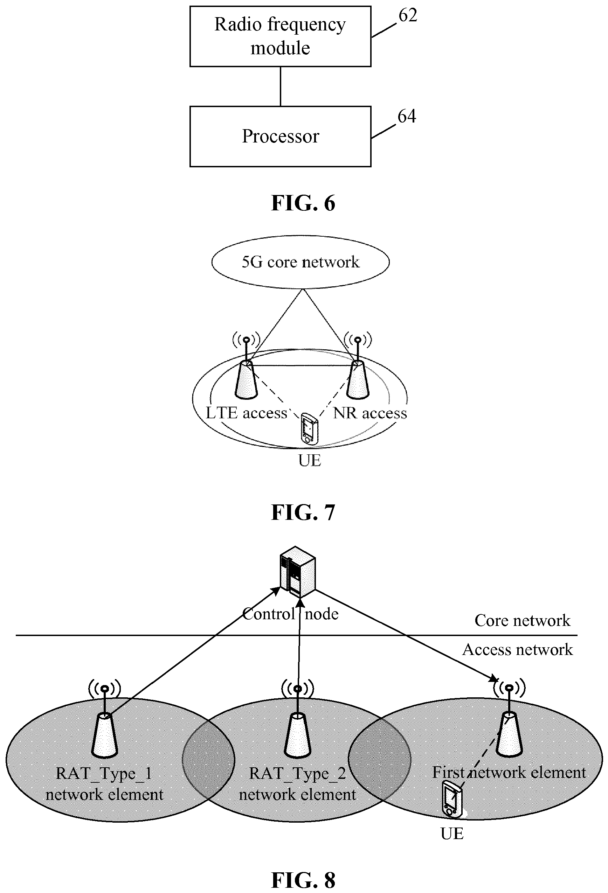

The embodiment of the present invention provides a network element. FIG. 6 is a structural block diagram of the network element according to the embodiment of the present invention. As shown in FIG. 6, the network element includes: a radio frequency module 62 and a processor 64.

The radio frequency module 62 is configured to transmit indication information for indicating that a first network element needs to obtain terminal capability information to a core network; and receive terminal capability information delivered by the core network. The terminal capability information is terminal capability information which is needed by the first network element and which is determined by the core network according to a RAT type used by the first network element.

The processor 64 is connected to the radio frequency module 62 and is configured to perform, according to the terminal capability information, radio resource configuration on a terminal connected to the first network element.

Through the above network element, after the indication information for indicating that a first network element needs to obtain terminal capability information is transmitted to the core network, the terminal capability information delivered by the core network may be received, where the terminal capability information is terminal capability information which is determined by the core network according to the RAT type used by the first network element and which is needed by the first network element. Thus, the first network element can obtain the terminal capability information in time when the terminal capability information is need. Therefore, the problem, how the network element obtains terminal capability information in time, can be solved, and the efficiency of obtaining terminal capability information is improved.

It is to be noted that the above indication information may be request information, and may be an Initial Context Setup procedure, but is not limited thereto.

It is to be noted that the above radio frequency module 62 may further be configured to report terminal capability information corresponding to a supported RAT type to the core network.

It is to be noted that the above network element may, but may not necessarily, be the first network element.

In an embodiment of the present invention, the radio frequency module 62 may further be configured to report the terminal capability information corresponding to the supported RAT type to the core network in at least one of the following manners. Manner 1: In the initial access process of the terminal, terminal capability information corresponding to the RAT type used by the first network element and terminal capability information corresponding to a RAT type interoperable with the RAT type used by the first network element are reported to the core network. Manner 2: Terminal capability information applicable to all RAT types is reported to the core network.

It is to be noted that the first network element and the second network element may be the same network element, or may be different network elements, but are not limited thereto.

It is to be noted that the above initial access process may be an attach process in the related art, but is not limited thereto.

It is to be noted that the radio frequency module 62 may further be configured to report terminal capability information corresponding to a supported RAT type to the core network. Mode a: A container list reported by the terminal is received and is reported to the core network. The container list includes: a first container that includes the terminal capability information corresponding to the RAT type used by the first network element, and a second container that includes the terminal capability information corresponding to the RAT type interoperable with the RAT type used by the first network element. Mode b: The container list reported by the terminal is received, a plurality of containers in the container list is extracted and obtained, and the obtained plurality of the containers are reported to the core network. Mode c: The container list reported by the terminal is received, the container list is divided according to RAT types and RAT types interoperable with the RAT types to obtain a plurality of groups of containers, and the plurality of groups of containers are reported to the core network. Each of the plurality of groups of containers includes: terminal capability information corresponding to a specified RAT type and terminal capability information corresponding to a RAT type interoperable with the specified RAT type.

It is to be noted that in a case where a plurality of RAT types interoperable with the RAT type used by the first network element exist, a plurality of second containers are included in the container list. Each of the plurality of second containers includes terminal capability information corresponding to a RAT type interoperable with the RAT type used by the first network element.

It is to be noted that in a case where the mode a is used, the container list corresponds to the RAT type used by the first network element.

It is to be noted that in the case where the mode b is used, the radio frequency module is further configured to perform coding on an identifier of the each of the containers in application layer protocol ASN.1 form of an interface between the first network element and a core network.

It is to be noted that in a case where the mode b or mode c is used, the plurality of groups of containers respectively correspond to RAT types used by a plurality of network elements. In the case where the mode b is used, the plurality of groups of containers are obtained by the core network dividing all of the containers according to RAT types and RAT types interoperable with the RAT types, and each of the plurality of groups of containers includes: the terminal capability information corresponding to the specified RAT type and the terminal capability information corresponding to the RAT type interoperable with the specified RAT type.

It is to be noted that the plurality of groups of containers corresponding to RAT types used by a plurality of network elements may be expressed as a group of containers corresponding to a RAT type used by a network element, or may be expressed as a group of containers corresponding to RAT types used by a plurality of network elements, for example, in the case where the RAT types used by the plurality of network elements are the same, and actually the RAT types used by the plurality of network elements correspond to the same group of containers, but is not limited thereto. In a case where the RAT types used by the plurality of network elements are different, the RAT types used by the plurality of network elements correspond to different groups of containers, but are not limited thereto.

### Embodiment 7

The embodiment of the present invention further provides a storage medium. In the embodiment, the storage medium may be configured to store program codes for executing the steps in the method in the embodiment 1 or 2.

In an implementation mode, in the embodiment, the storage medium may include, but is not limited to, a USB flash disk, a ROM, a RAM, a mobile hard disk, a magnetic disk, an optical disk or another medium capable of storing program codes.

In an implementation mode, in the embodiment, a processor executes the steps in the method in the embodiment 1 or 2 according to the program codes stored in the storage medium.

In an implementation mode, for examples in the embodiment, reference may be made to the examples described in the above embodiments and optional implementation modes, and repetition will not be made in the embodiment.

To better understand the embodiments of the present invention, the present invention will be further described below in conjunction with preferred embodiments.

The embodiment of the present invention provides a system architecture. FIG. 7 is a schematic diagram of an architecture of a communication system according to the embodiment of the present invention. The embodiment is a method based on the system architecture shown in FIG. 7. A type and a coverage range of a base station, a type of a core network, an interface between base stations/an interface between the base station and the core network, and the number of serving base stations of the UE are not limited in the embodiment. In the present application, a serving base station that currently establishes a control plane (CP) interface with a core network is referred to as a first network element, and if another base station simultaneously performs data transmission on a radio interface with the UE, the another base station is referred to as a second network element; two serving network elements are connected to the same core network on the user plane. On the radio interface, different RATs are used by the first network element and the second network element.

It is to be noted that a function performed by the first network element in the embodiment may be partially or entirely the same as the function performed by the first network element in the above embodiments 1 to 7, and a function performed by the second network element in an initial access process in the embodiment may be partially or entirely the same as the function performed by the second network element in the above embodiments 1 to 7.

In the core network, a node that receives and stores UE radio capability information reported by the serving network element and that can select and transmit appropriate UE radio capability information to the first network element is an entity or module responsible for facing towards a radio access network and having a control or management function.

The scheme in which the control node receives and selects to transmit the UE radio capability information (the interface between the control node and the serving network element is referred to as an NG interface in the present application) reported by the serving network element may include, but not limited to, three forms described below.

The control node receives, on the NG interface, the UE capability information reported by the serving network element and saves the UE capability information. The UE capability information is carried in the report message of the NG interface in the form of a container. The serving network element obtains the UE capability information on the radio interface, and the UE capability information is in the form of ASN. 1 coding corresponding to the RAT used by the serving network element.

After the control node stores the capability information (two independent containers) corresponding to RAT_Type_1 and RAT_Type_2 separately, and when the UE is restored to the ECM_Connected state through the first network element (using RAT_Type_1 or RAT_Type_2), the control node selects corresponding UE radio capability information according to the type of the current RAT (or the type of the first network element), and sends the UE radio capability information to the first network element via the NG interface.

It is assumed that the RAT_Type_1 system supports interoperation with the RAT_Type_2 system and the RAT_Type_3 system, and the RAT_Type_2 system supports interoperation with the RAT_Type_1 system. That is, when the UE accesses the network through the RAT_Type_1 serving network element, the serving network element needs to obtain radio capability information of the UE about RAT_Type_1, RAT_Type_2, and RAT_Type_3 (that is, three UE-CapabilityRAT-Containers are included in the information), and when the UE accesses the network through the RAT_Type_2 serving network element, the serving network element needs to obtain radio capability information of the UE about RAT_Type_2 and RAT_Type_1 (that is, two UE-CapabilityRAT-Containers are included in the information). In an implementation mode, within the radio capability information container (i.e., the radio capability information parameter) corresponding to the respective RAT, the information is coded in the ASN.1 form of the corresponding RAT standard, respectively.

It is assumed that the UE initially accesses the network through the RAT_Type_1 serving network element, and after the serving network element obtains UE capability information on the radio interface, the RAT types of the radio capability information corresponding to the RAT_Type_1 and RAT_Type_2 are displayed in the report message carried on the NG interface and transmitted to the control node. That is, the RAT type information is coded in application layer ASN.1 form of the NG interface.

In this way, when the UE enters the ECM -Connected state through the first network element that uses RAT_Type_2, the radio capability information container corresponding to the RAT_Type_1 and the radio capability information container corresponding to the RAT_Type_2 may be carried in the NG interface message by the control node and transmitted to the first network element. Similarly, the RAT Type information is also coded in application layer ASN.1 form of the NG interface.

Similar to the above 2), it is assumed that the RAT_Type_1 system supports interoperation with the RAT_Type_2 system and the RAT_Type_3 system, and that the RAT_Type_2 system supports interoperation with the RAT_Type_1 system, and then in the RAT_Type_2 system, radio capability information corresponding to the RAT_Type_3 may be added. That is, even if the UE initially accesses the network through the RAT_Type_2 serving network element, radio capability information including three UE-CapabilityRAT-Containers from the UE may also be received by the serving network element and reported to the control node.

In this way, regardless of whether the UE initially accesses the network through the RAT_Type_1 serving network element or the RAT_Type_2 serving network element, the control node receives and stores the same UE capability information. When the UE enters the ECM_Connected state again, the control node may transmit the stored UE radio capability information to the first network element.

The NG interface procedure in which the control node transmits the UE radio capability information to the serving network element may include, but is not limited to, an Initial Context Setup procedure, or another new interface procedure such as a procedure in which the first network element requests radio capability information corresponding to a certain RAT type from the core network. In an implementation mode, a scenario applicable to the NG interface procedure includes, but is not limited to, a service request scenario, an inter-RAT tight coupling scenario, an inter-RAT handover scenario, and another new demand scenario.

After the radio capability information is received, the first network element and/or may perform, based on the information, effective configuration and scheduling on the UE.

The system architecture and the scenario described in the present application will be widely deployed in future communication networks, and the inventive solution described in the present patent enables the core network to transmit appropriate UE radio capability information to the access network to the greatest extent in the system and scenario, reducing signaling transmission on the radio interface, avoiding waste of radio resources, and thereby reducing the possibility of interruption of the UE in a mobile scenario and improving the user experience.

### Example 1

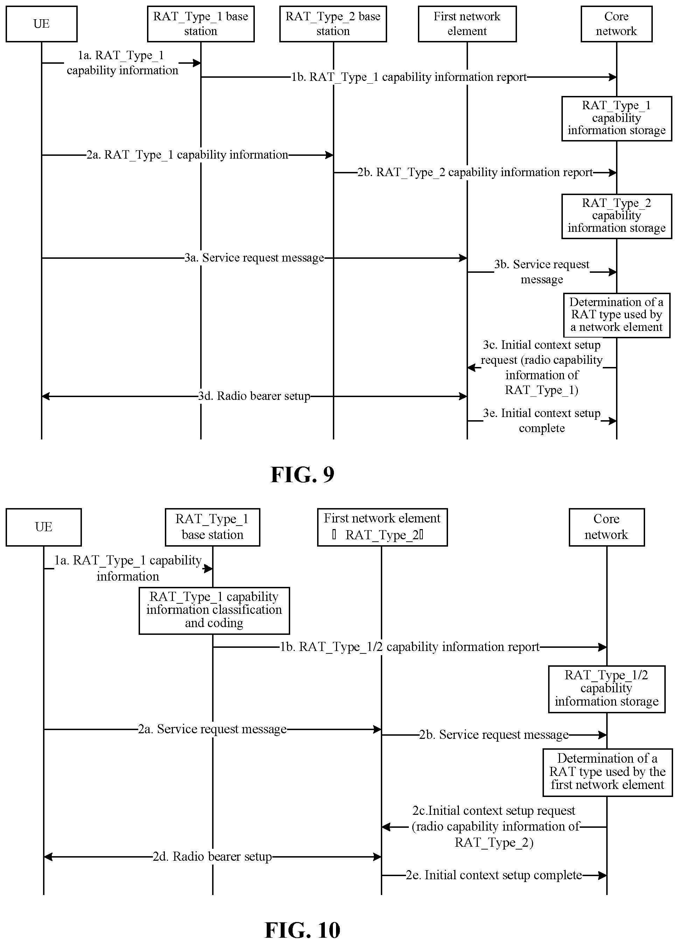

The UE accessed the core network through network elements using RAT_Type_1 and RAT_Type_2 respectively for data transmission, so even when the UE is in the ECM-IDLE state, the control node in the core network still stores the UE radio capability information corresponding to the RAT_Type_1 system and the RAT_Type_2 system. At this time, when the UE is restored to the ECM_Connected state through the first network element using RAT_Type_1, the control node selects corresponding radio capability information according to the current RAT type and transmits the radio capability information to the first network element. FIG. 8 is a schematic diagram of a scenario according to the embodiment 1 of the present invention. FIG. 9 is a flowchart of a method according to the embodiment 1 of the present invention. As shown in FIGS. 8 and 9, the method includes the steps described below.

Step 1: In the present application, a system that uses RAT_Type_1 on the radio interface is referred to as a RAT_Type_1 system, and during the process in which the UE accesses the network through a base station (i.e., serving network element in the first access) in a radio access network of the RAT_Type_1 system for data communication (i.e., in the ECM-Connected state) for the first time, the serving network element reports UE radio capability information obtained from the UE to the control node located in the core network.

It is assumed that the RAT_Type_1 system supports interoperation with RAT_Type_2 and RAT_Type_3, the radio capability information of the UE is a container list (referred to as UE-CapabilityRAT-ContainerList), and three UE-Capability RAT-Containers are included in the list. The format of each UE-CapabilityRAT-Container may be:

```
 UE-CapabilityRAT-Container ::= SEQUENCE {
    rat-Type RAT-Type,
    ueCapabilityRAT-Container OCTET STRING
 }.
```

The RAT-Types respectively represent RAT_Type_1, RAT_Type_2 and RAT_Type_3, and the ueCapabilityRAT-Container under each RAT-Type respectively includes the UE radio capability information in the RAT-Types. In an implementation mode, parameters included in the ueCapabilityRAT-Containers under the RAT_Type_2 and the RAT_Type_3 are coded in the ASN.1 formats used by the standards of their respective systems, and the remaining information is coded in ASN.1 form used by the standard of the RAT_Type_1 system.

The serving network element performs radio resource configuration and scheduling on the UE according to the UE radio capability information. When the UE enters the ECM-IDLE state, the serving network element releases the UE radio capability information, while the control node still stores the UE radio capability information.

It is to be noted that the step 1 includes steps 1a and 1b shown in FIG. 9, but is not limited thereto.

Step 2: When the UE accesses the network through a base station (serving network element in the current scenario) of the RAT_Type_2 system for the first time, the RAT_Type_2 serving network element will still report the UE radio capability information obtained from the UE to the control node located in the core network. It is assumed that the RAT_Type_2 system only supports interoperation with the RAT_Type_1 system, the UE-CapabilityRAT-ContainerList reported at this time includes only two UE-CapabilityRAT-Containers. In an implementation mode, the reported information and RAT-Type are both in ASN.1 form used by the standard of the RAT_Type_2 system, and only the parameter included in the ueCapabilityRAT-Container corresponding to RAT_Type_1 is coded in the format of ASN.1 used by the standard of the RAT_Type_1 system.

It is to be noted that the step 2 may include steps 2a and 2b shown in FIG. 9, but is not limited thereto.

That is, the control node stores different and independent radio capability information containerlists for the same UE, and each piece of radio capability information corresponds to a RAT system.

Step 3: When the UE is restored to the ECM_Connected state again through the base station (referred to as the first network element) in the RAT_Type_1 system, taking a Service Request procedure as an example, the control node receives a Service Request message transmitted by the first network element, and then determines the RAT Type used by the first network element to obtain a result of RAT_Type_1. The control node selects radio capability information (the parameter is the same as that described in the step 1) corresponding to the RAT_Type_1 from the capability information stored for the UE, carries the radio capability information corresponding to the RAT_Type_1 in an INITIAL CONTEXT SETUP REQUEST message, and transmits the radio capability information corresponding to the RAT_Type_1 to the first network element via the NG interface between the control node and the first network element. The first network element performs radio resource configuration (such as radio bearer setup) on the UE according to the radio capability information and other information included in the NG message. After the control plane procedure of the radio interface is finished, the first network element replies an INITIAL CONTEXT SETUP REQUEST Complete message to the control node.

It is to be noted that the step 3 may include steps 3a, 3b, 3c, 3d and 3e shown in FIG. 9, but is not limited thereto.

According to the solution described in the embodiment, the control node may identify each UE only in the same RAT type without the need for inter-RAT identification.

### Example 2

For the scenario and the procedure of the embodiment 2, reference may be made to the description in the embodiment 1, but the processing and reporting format of the UE radio capability information received by the serving network element on the radio interface is different from those described in the embodiment 1. FIG. 10 is a flowchart of a method according to the embodiment 2 of the present invention. As shown in FIG. 10, the method includes the steps described below.

Step 1: Similar to the embodiment 1, it is assumed that the RAT_Type_1 system supports interoperation with the RAT_Type_2 system and the RAT_Type_3 system, the RAT_Type_2 system supports interoperation with the RAT_Type_1 system, and base stations of the RAT_Type_1 system and the RAT_Type_2 system access the same core network (that is, the two base stations are both managed by the control node in the core network), while the RAT_Type_3 accesses another core network.

Then, when the UE accesses the network through the base station (serving network element) of the RAT_Type_1 system for the first time, similar to the description in the embodiment 1, the UE-CapabilityRAT-ContainerList including UE radio capability information corresponding to RAT_Type_1, RAT_Type_2 and RAT_Type_3 is obtained by the serving network element. The RAT_Type_1 serving network element knows that RAT_Type_2 supports interoperation with RAT_Type_1, and therefore the RAT_Type_1 base station divides three UE-capabilityRAT-containers into two groups. The first group includes UE radio capability information corresponding to RAT_Type_1 and RAT_Type_2, and the second group includes only UE radio capability information corresponding to RAT_Type_3. When the UE radio capability information is reported to the control node, the radio capability information corresponding to RAT_Type_1 is the same as that described in the embodiment 1, and further radio capability information applicable to the RAT_Type_2 system will be indicated (that is, the first group includes radio capability information of two UE-capability RAT-containers). The radio capability information indicating the RAT_Type_2 is coded in application layer ASN.1 form of an interface between the serving network element and the control node.

In an implementation mode, the serving network element displays the RAT type information in the UE-CapabilityRAT-Container as to be in inter-interface application layer ASN.1 form, and indicates that the UE-Capability RAT-Container corresponding to the RAT_Type_1 and the RAT_Type_2 and in the UE-CapabilityRAT-ContainerList corresponding to the RAT_Type_1 is also applied to the RAT_Type_2 system.

In an implementation mode, at the time of reporting, the base station codes content except the ueCapabilityRAT-Container in inter-interface application layer ASN.1 form, and meanwhile indicates that ueCapabilityRAT-Containers corresponding to RAT_Type_1, RAT_Type_2, and RAT_Type_3 are applied to the RAT_Type_1 system and ueCapabilityRAT-Containers corresponding to RAT_Type_1 and RAT_Type_2 are applied to the RAT_Type_2 system.

The control node may store UE radio capability information for the RAT_Type_1 system and the RAT_Type_2 system, respectively.

Step 2: The step 2 is similar to the step 3 in the embodiment 1. In an implementation mode, when the UE accesses the network through the base station (the first network element) of the RAT_Type_2 system for the first time, and after the control node determines that the first network element uses the RAT_Type_2, radio capability information corresponding to the RAT_Type_2 is selected by the control node and is transmitted to the first network element. In the solution described in the embodiment 2, the control node needs to uniquely identify the UE in RAT_Type_1 and RAT_Type_2.

It is to be noted that the above step 1 may include steps 1a and 1b shown in FIG. 10, and the above step 2 may include steps 2a, 2b, 2c, 2d and 2e shown in FIG. 10, which are not limited thereto.

### Example 3

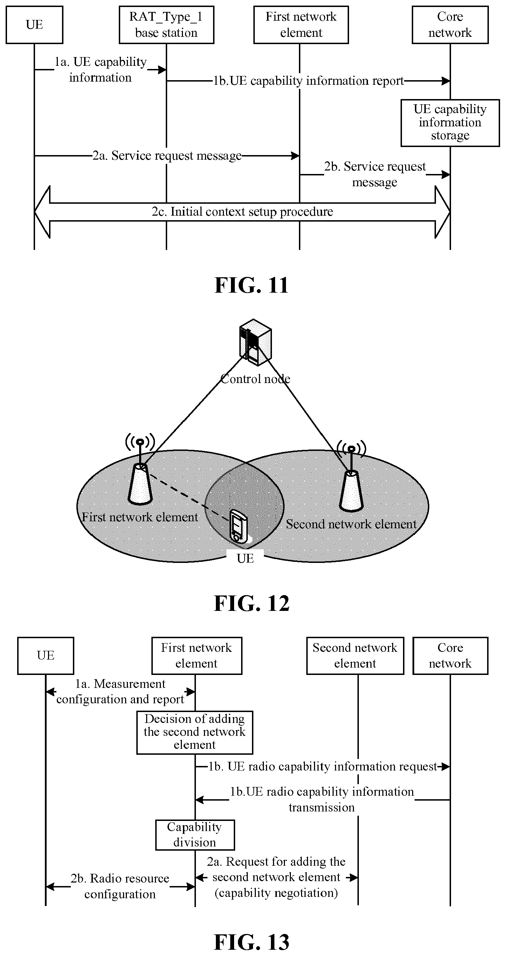

It is assumed that the RAT_Type_1 system supports interoperation with the RAT_Type_2 system while the RAT_Type_2 system supports interoperation with the RAT_Type_1 system and the RAT_Type_3 systems, and base stations of the RAT_Type_1 system and the RAT_Type_2 system access the same core network while RAT_Type_3 accesses another core network. When the UE accesses the network through the RAT_Type_1 system, the UE reports all supported RAT types and corresponding radio capability information. That is to say, the core network only stores a set of complete UE capability information for the UE, and transmits the UE capability information to the access network when the UE is restored from the ECM_IDLE state to the ECM Connected state. FIG. 11 is a flowchart of a method according to the embodiment 3 of the present invention. As shown in FIG. 11, the method includes the steps described below.

Step 1: When the UE accesses the network through the base station (serving network element) of the RAT_Type_1 system for the first time, the RAT_Type_1 system only supports interoperation with the RAT_Type_2 system, but the UE still transmits all supported RAT types and corresponding capability information to the serving network element. That is, three UE-CapabilityRAT-Containers will be included in the UE-CapabilityRAT-ContainerList. The capability information is received by the serving network element, then reported to the control node in the core network, and stored by the control node.

Step 2: Similar to the step 3 in the embodiment 1, when the UE performs the service request procedure through the first network element, regardless of the RAT type used by the first network element (that is, the control node does not have to determine the network element/RAT type), the control node transmits the stored UE radio capability information to the first network element. The first network element may receive sufficient UE radio capability information that meets the requirements.

It is to be noted that the above step 1 may include steps 1a and 1b shown in FIG. 11, and the above step 2 may include steps 2a, 2b and 2c shown in FIG. 11, which are not limited thereto.

### Example 4

The UE accesses the network through the first network element. When the control node in the core network receives a request for UE radio capability information from the first network element, the control node transmits the requested radio capability information to the first network element according to information indicated in the request message. FIG. 12 is a schematic diagram of a scenario according to the embodiment 4 of the present invention. FIG. 13 is a flowchart of a method according to the embodiment 4 of the present invention. As shown in FIGS. 12 and 13, the method includes the steps described below.

Step 1: The UE currently communicates with only the accessed first network element. The first network element uses RAT_Type_1, and UE radio capability information corresponding to RAT_Type_1 is known. The first network element makes, according to information such as a measurement result report of the UE, a radio resource management decision for adding the third network element to provide the UE with additional radio resources. The third network element uses RAT_Type_2. When the first network element does not have the UE radio capability information corresponding to RAT_Type_2, the first network element requests the UE radio capability information (message 1b) from the control node in the core network. The core network transmits the requested information to the first network element according to the information (at least the request for the radio capability information corresponding to the RAT_Type_2 is indicated, and the request for another RAT_Type_or even for the complete radio capability information pair may also be included) indicated in the message.

Step 2: After the UE radio capability information corresponding to the RAT_Type_2 is obtained, the first network element may perform capability division according to the information, request radio resources from the second network element, and perform capability distribution negotiation. After the coordination of the first network element and the second network element is completed, the first network element may instruct, through the control plane signaling of the radio interface, the UE to reconfigure the radio resources, which is the same as that in the related art. Repetition is not made herein again.

It is to be noted that the above step 1 may include steps 1a and 1b shown in FIG. 13, and the above step 2 may include steps 2a and 2b shown in FIG. 13, which are not limited thereto.

Apparently, those skilled in the art should know that each of the above-mentioned modules or steps of the present invention may be implemented by a general-purpose computing apparatus, the modules or steps may be concentrated on a single computing apparatus or distributed on a network formed by multiple computing apparatuses, and in an implementation mode, the modules or steps may be implemented by program codes executable by the computing apparatuses, so that modules or steps may be stored in a storage apparatus and executed by the computing apparatuses. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are merely embodiments of the present invention and are not intended to limit the present invention, and for those skilled in the art, the present invention may have various modifications and variations. Any modifications, equivalent substitutions, improvements and the like made within the spirit and principle of the present invention should fall within the scope of the present invention.

### INDUSTRIAL APPLICABILITY

With the technical solutions of the present invention, in the case where the indication information for indicating that a first network element needs to obtain terminal capability information is received, terminal capability information needed by the first network element may be determined according to a RAT type used by the first network element, and the determined terminal capability information is transmitted to the first network element. That is, the terminal capability information needed by the first network element may be determined according to the RAT type used by the first network element, and the determined terminal capability information is then transmitted to the first network element, so that the first network element can obtain the terminal capability information in time when the terminal capability information is need. Therefore, the problem, how the network element obtains terminal capability information in time, can be solved, and the efficiency of obtaining terminal capability information is improved.

## Claims

1. An information transmission method, comprising:
receiving indication information for indicating that a first network element needs to obtain terminal capability information;
determining, according to a radio access technology, RAT, type used by the first network element, the terminal capability information needed by the first network element; and
transmitting the determined terminal capability information to the first network element.

2. The method of claim 1, before receiving the indication information for indicating that the first network element needs to obtain the terminal capability information, the method further comprising:
obtaining terminal capability information corresponding to a RAT type supported by a terminal; and
storing the obtained terminal capability information.

3. The method of claim 2, wherein obtaining the terminal capability information corresponding to the RAT type supported by the terminal in at least one of following manners:
manner 1: in an initial access process of the terminal, receiving specified terminal capability information reported by a second network element, wherein the specified terminal capability information comprises: terminal capability information corresponding to a RAT type used by the second network element and terminal capability information corresponding to a RAT type interoperable with the RAT type used by the second network element; and wherein the terminal capability information needed by the first network element is contained in the specified terminal capability information; and
manner 2: receiving terminal capability information applicable to all RAT types.

4. The method of claim 3, wherein the manner 1 comprises at least one of following modes:
mode a: receiving a container list transmitted by the second network element, wherein the container list comprises: a first container that comprises the terminal capability information corresponding to the RAT type used by the second network element, and a second container that comprises the terminal capability information corresponding to the RAT type interoperable with the RAT type used by the second network element;
mode b: receiving a plurality of containers transmitted by the second network element, wherein the plurality of the containers is obtained after the second network element extracts containers from the container list, and each of the containers comprises one piece of terminal capability information corresponding to one RAT type; and
mode c: receiving a plurality of groups of containers transmitted by the second network element, wherein each of the plurality of groups of containers comprises: terminal capability information corresponding to a specified RAT type and terminal capability information corresponding to a RAT type interoperable with the specified RAT type; and the plurality of groups of containers are obtained by the second network element dividing the container list according to RAT types and RAT types interoperable with the RAT types.

5. The method of claim 4, wherein in response to determining that there is a plurality of RAT types interoperable with the RAT type used by the second network element, a plurality of second containers are contained in the container list, wherein each of the plurality of second containers comprises terminal capability information corresponding to one RAT type interoperable with the RAT type used by the second network element.

6. The method of claim 4 or 5, wherein in response to determining that the mode a is used, the container list corresponds to the RAT type used by the first network element.

7. The method of claim 6, wherein
determining, according to the RAT type used by the first network element, the terminal capability information needed by the first network element comprises: determining, according to the RAT type used by the first network element, the container list corresponding to the RAT type used by the first network element; and
transmitting the determined terminal capability information to the first network element comprises: transmitting the determined container list to the first network element.

8. The method of claim 4, wherein in response to determining that the mode b is used, after receiving the plurality of the containers transmitted by the second network element, the method further comprises:
dividing all of the containers according to RAT types and RAT types interoperable with the RAT types to obtain a plurality of groups of containers, wherein each of the plurality of groups of containers comprises the terminal capability information corresponding to the specified RAT type and the terminal capability information corresponding to the RAT type interoperable with the specified RAT type.

9. The method of claim 4 or 8, wherein in response to determining that the mode b is used, an identifier of each of the containers is coded in application layer protocol ASN.1 form of an interface between the second network element and a core network.

10. The method of claim 4 or 8, wherein in response to determining that the mode b or mode c is used, the plurality of groups of containers respectively correspond to RAT types used by a plurality of network elements.

11. The method of claim 10, wherein
determining, according to the RAT type used by the first network element, the terminal capability information needed by the first network element comprises: determining, according to the RAT type used by the first network element and from the plurality of groups of containers, a group of containers corresponding to the RAT type used by the first network element; and
transmitting the determined terminal capability information to the first network element comprises: transmitting the determined group of containers to the first network element.

12. The method of claim 3, wherein in a case where the manner 2 is used, the terminal capability information corresponding to the all RAT types is contained in a container list, and
transmitting the determined terminal capability information to the first network element comprises: transmitting the container list to the first network element.

13. A resource configuration method, comprising:
transmitting indication information to a core network, wherein the indication information is used for indicating that a first network element needs to obtain terminal capability information;
receiving terminal capability information delivered by the core network, wherein the terminal capability information is terminal capability information which is needed by the first network element and is determined by the core network according to a radio access technology, RAT, type used by the first network element; and
performing, according to the terminal capability information, radio resource configuration on a terminal connected to the first network element.

14. The method of claim 13, before transmitting the indication information to the core network, wherein the indication information is used for indicating that the first network element needs to obtain the terminal capability information, the method further comprising:
in an initial access process of the terminal, reporting to the core network, by a second network element, terminal capability information corresponding to a RAT type supported by the second network element.

15. The method of claim 14, wherein reporting to the core network, by the second network element, the terminal capability information corresponding to the RAT type supported by the second network element in at least one of following manners:
manner 1: in the initial access process of the terminal, reporting, by the second network element, specified terminal capability information to the core network, wherein the specified terminal capability information comprises: terminal capability information corresponding to a RAT type used by the second network element and terminal capability information corresponding to a RAT type interoperable with the RAT type used by the second network element, which are reported to the core network; and wherein the terminal capability information needed by the first network element is contained in the specified terminal capability information; and
manner 2: reporting to the core network, by the second network element, terminal capability information applicable to all RAT types.

16. The method of claim 15, wherein the manner 1 comprises at least one of following modes:
mode a: receiving, by the second network element, a container list reported by the terminal, and reporting the container list to the core network, wherein the container list comprises: a first container that comprises the terminal capability information corresponding to the RAT type used by the second network element, and a second container that comprises the terminal capability information corresponding to the RAT type interoperable with the RAT type used by the second network element;
mode b: receiving, by the second network element, the container list reported by the terminal, extracting and obtaining a plurality of containers from the container list, and reporting the plurality of the containers to the core network; and
mode c: receiving, by the second network element, the container list reported by the terminal, dividing the container list according to RAT types and RAT types interoperable with the RAT types to obtain a plurality of groups of containers, and reporting the plurality of groups of containers to the core network, wherein each of the plurality of groups of containers comprises: terminal capability information corresponding to a specified RAT type and terminal capability information corresponding to a RAT type interoperable with the specified RAT type.

17. The method of claim 16, wherein in response to determining that there is a plurality of RAT types interoperable with the RAT type used by the second network element, a plurality of second containers are contained in the container list, wherein each of the plurality of second containers comprises terminal capability information corresponding to one RAT type interoperable with the RAT type used by the second network element.

18. The method of claim 16 or 17, wherein in response to determining that the mode a is used, the container list corresponds to the RAT type used by the first network element.

19. The method of claim 16, wherein in response to determining that the mode b is used, reporting the obtained each of the containers to the core network comprises:
performing, by the second network element, coding on an identifier of each of the containers in application layer protocol ASN.1 form of an interface between the second network element and the core network; and reporting the each of the containers after coding to the core network.

20. The method of claim 16 or 19, wherein in response to determining that the mode b or mode c is used, the plurality of groups of containers respectively correspond to RAT types used by a plurality of network elements, wherein in response to determining that the mode b is used, the plurality of groups of containers are obtained by the core network dividing all of the containers according to RAT types and RAT types interoperable with the RAT types, and each of the plurality of groups of containers comprises: the terminal capability information corresponding to the specified RAT type and the terminal capability information corresponding to the RAT type interoperable with the specified RAT type.

21. An information transmission apparatus, comprising:
a reception module, which is configured to receive indication information for indicating that a first network element needs to obtain terminal capability information;
a determination module, which is configured to determine, according to a radio access technology, RAT, type used by the first network element, the terminal capability information needed by the first network element; and
a transmission module, which is configured to transmit the determined terminal capability information to the first network element.

22. The apparatus of claim 21, further comprising:
an obtaining module, which is configured to obtain terminal capability information corresponding to a RAT type supported by a terminal; and
a storage module, which is configured to store the obtained terminal capability information.

23. A resource configuration apparatus, comprising:
a transmission module, which is configured to transmit indication information to a core network, wherein the transmit indication information is used for indicating that a first network element needs to obtain terminal capability information;
a reception module, which is configured to receive terminal capability information delivered by the core network, wherein the terminal capability information is terminal capability information which is needed by the first network element and is determined by the core network according to a radio access technology, RAT, type used by the first network element; and
a processing module, which is configured to perform, according to the terminal capability information, radio resource configuration on a terminal connected to the first network element.

24. The apparatus of claim 23, further comprising:
a reporting module, which is configured to report terminal capability information corresponding to a supported RAT type to the core network.

25. A control node, located in a core network and comprising:
a processor, which is configured to receive indication information for indicating that a first network element needs to obtain terminal capability information; and determine, according to a radio access technology, RAT, type used by the first network element, the terminal capability information needed by the first network element; and
a radio frequency module, which is configured to transmit the determined terminal capability information to the first network element.

26. The control node of claim 25, wherein the processor is further configured to obtain terminal capability information corresponding to a RAT type supported by a terminal; and
the control node further comprises: a memory, which is configured to store the obtained terminal capability information.

27. A network element, comprising:
a radio frequency module, which is configured to transmit indication information to a core network, and receive terminal capability information delivered by the core network; wherein the indication information is used for indicating that a first network element needs to obtain terminal capability information, wherein the terminal capability information is terminal capability information which is needed by the first network element and is determined by the core network according to a radio access technology, RAT, type used by the first network element and; and
a processor, which is configured to perform, according to the terminal capability information, radio resource configuration on a terminal connected to the first network element.

28. The network element of claim 27, wherein the radio frequency module is further configured to report terminal capability information corresponding to a supported RAT type to the core network.

29. A storage medium, which is configured to store computer-executable instructions for executing the information transmission method of any one of claims 1 to 12, or the resource configuration method of any one of claims 13 to 20.
